# EUROPEAN PATENT SPECIFICATION

(11) **EP 0 818 149 B1**
(45) Date of publication and mention of the grant of the patent: **08.10.2003**
(21) Application number: 97111251.1
(22) Date of filing: 04.07.1997
(51) Int. Cl.: A23C 19/076, A23C 9/13, A23P 1/06, A23C 13/16

(54) **A food composition in the form of a mousse-like plastic mass**
Nahrungsmittel in Form einer schaumartigen plastischen Masse
Produit alimentaire sous forme de masse plastique mousseuse

(30) Priority: 08.07.1996 CH 169296
(43) Date of publication of application: 14.01.1998
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt (DE)
(72) Inventor: Cavalli, Moreno, 12051 Alba (Cuneo) (IT)
(74) Representative: Rambelli, Paolo

(56) References cited:
- EP-A- 0 256 561
- WO-A-95/22906
- DE-A- 4 032 698
- FR-A- 2 423 163
- DATABASE WPI Section Ch, Week 8501 Derwent Publications Ltd., London, GB; Class D13, AN 85-001940 XP002057378 & HU 33 379 A (VAJDA G) , 28 November 1984
- WALENTA W ET AL: "EINFLUSS VON MOLKENPROTEINZUSAETZEN AUF DIE STRUKTURAUSBILDUNG VON FRISCHKAESEZUBEREITUNGEN" DEUTSCHE MOLKEREI ZEITUNG DMZ, vol. 109, no. 18, 5 May 1988, pages 538-543, XP002004732
- A. VAN GENNIP: "Geschäumte Desserts auf der Basis von Milcheiweiß" MOLKEREITECHNIK, vol. 32, 1976, pages 65-71, XP002057377

## Description

The present invention relates to a food composition constituted by an oil-in-water emulsion in the form of a mousse-like plastic mass comprising food fats, milk proteins, water, and possibly sugars, and having an acid pH generally within the range of from 3.5 to 6.

A food composition of the type mentioned above is described in US 4 855 155 (EP-A-0 256 561). This composition, which is produced with the use of fresh cheese (quark) or yoghurt and with the use of condensed whole milk, has a fairly high water content within the range of from 46 to 48% which makes it difficult to use a filling composition in bakery products.

WO95/22906 describes an optionally fermented dairy filling, having a water activity of from 0.75 to 0.81 and a fat content such that a water-in-oil emulsion can be achieved; the described formulation contemplates the use of thickeners such as gelatine and guar gum.

A. van Gennip: " Geschäumte Desserts auf der Basis von Milcheiweiss" , Molkereitechnik , vol.32, 1976, pages 65-71, discloses that whey proteins are suitable to improve the stability of an aerated composition.

A first object of the present invention is to provide a composition of the type mentioned above, which is physically and chemically stable and suitable for use as a filling composition in contact with bakery products.

A second object of the invention is to provide a physically and chemically stable composition without the use of thickeners or fusion salts, which prevent the syneresis or precipitation of the proteins.

This object is achieved by means of a food composition constituted by a foamed oil-in-water emulsion comprising fats, milk proteins, water, and possibly sugars, having an acid pH within the range of from 3.5 to 6, characterized in that it has:
- a food fat content of from 20 to 45% by weight, and
- a water content of from 20 to 38% by weight,
it is free of thickeners and fusion salts, and it is obtainable by the steps of:
a) preheating a food component selected from fresh cheese, yoghurt, sour cream and mixtures thereof, with stirring, at a temperature of from 40 to 60°C;
b) dissolving, in the mixture prepared in a), milk whey proteins in powder form in quantities of from - 1 to 10% by weight with reference to the final weight of the emulsion, and possibly sweeteners in powder form, with stirring,
c) preparing a fat phase comprising butter fat and/or vegetable fats at a temperature of between 50 and 70°C, in the presence of a lipophilic emulsifier;
d) mixing the fat phase thus prepared in c) with the phase produced in b), with stirring, to produce an oil-in-water emulsion having a viscosity of from 0.5 to 4 Pa.s (500 to 4000 cps) at 65°C (Brookfield viscosimeter No. 5, 50 rpm);
e) pasteurizing the emulsion thus obtained at a temperature of between 80 and 110°C for a period of from 20 to 40 seconds;
f) precooling the mixture to a temperature of from 30 to 60°C; and
f) aerating the mixture by the injection of an inert gas.

In the preferred embodiment, the product is produced with an additional homogenization step carried out immediately before the pasteurization step.

The fresh cheese or quark used according to the invention is preferably the product produced by inoculating a mixture of milk and cream having a fat content of the order of 5-20% by weight, preferably about 13% by weight, with milk ferments preferably in quantities of between 0.1 and 2% by weight, more preferably about 0.5% by weight, and leaving the inoculated mixture to ferment for a period generally between 5 and 12 hours, preferably about 8 hours, at a temperature of 20-45°C, preferably about 40°C.

Fermentation stops when the predetermined pH value, preferably of 3.5-5, more preferably 4.5 is reached. After fermentation, the whey is separated by the techniques normally used for this purpose, for example, by centrifugal separators, filtering and ultrafiltration systems. The whey may also be separated before fermentation; in this case, the fermentation times are generally between 8 and 15 hours, preferably about 12 hours.

In the preferred embodiment, the milk ferments inoculated for the preparation of the fresh cheese have a ratio between lactobacilli and streptococci within the range of from 1:10 to 1:100. The aforementioned range of values for the ratio of microorganisms is considered optimal since it has been found that acidification brought about by the lactobacilli causes a change in structure due to the aggregated protein phase; moreover, excessive development of lactobacilli may give rise to known unpleasant organoleptical effects which are undesirable for the use for which the product is intended within the scope of the invention.

The fermentation product obtained has a soft organoleptical structure with an absence of casein macro-aggregates.

The fresh cheese used within the scope of the invention preferably has a moisture content of between 45 and 80% by weight, more preferably between 60 and 70% by weight. Its fat content is preferably between 16 and 40% by weight, more preferably between 22 and 27% by weight, and the protein content is preferably from 2 to 10% by weight, more preferably between 5 and 6% by weight.

The fresh cheese is preferably used, within the scope of the invention, in quantities of from 20 to 60% by weight and more preferably between 30 and 40% by weight with reference to the total weight of the composition.

The yoghurt food component is preferably used in the food composition in quantities of from 10 to 40% by weight, preferably from 25 to 35% by weight; this component may be used alone or mixed with fresh cheese and/or sour cream. When it is used mixed with sour cream and/or fresh cheese, the total content of these components is generally no greater than 60% by weight, with reference to the total weight of the emulsion.

If the yoghurt is used alone as a base for the food composition it is preferable, in the preheating step a), to add a surfactant which can be dispersed in water, preferably constituted by a monoglyceride, in a quantity sufficient to act as a stabilizer. The quantity of surfactant which can be dispersed in water is typically between 0.1 and 0.8% by weight.

Within the scope of the present invention, the term surfactant which can be dispersed in water is intended to include compounds or mixtures of compounds having an HLB value greater than 6.5 and preferably between 7 and 8.

The term lipophilic emulsifier is intended to include compounds such as, in particular, monoglycerides, diglycerides and fatty-acid glycerol esters and mixtures thereof having HLB values of between 3 and 6.5, preferably between 4 and 5.

Within the scope of the invention, the sour cream is used in concentrations of between 20 and 60% by weight, more preferably between 30 and 40% by weight, with reference to the total weight of the composition, the maximum value relating to the content of sour cream alone or to the mixture of sour cream and fresh cheese and/or yoghurt.

In the case of sour cream it is also preferable to use a fermentation product produced by the milk-enzyme inoculation methods described above with reference to fresh cheese, starting with cream having a fat content preferably from 30 to 40% by weight, more preferably about 35% by weight.

The total casein content of the composition is preferably no greater than 5% by weight with reference to the total weight of the composition.

In the first step of the preparation of the food composition, the fresh cheese, yoghurt or sour cream or a mixture of these products is heated to a temperature of between 40 and 60°C with continuous stirring; in this step, particularly. with the use of yoghurt, the addition of a surfactant which can be dispersed in water, particularly constituted by a monoglyceride, is provided for.

If it is desirable to produce a sweet product, any sugars such as glucose, invert sugar, mixtures of glucose and fructose, glucose syrups or honey may be added in the liquid state in this step, before the heating; the total content of sugars in the final composition, when they are used, is generally within the range of from 20 to 40% by weight.

In the next step of the preparation of the product, any crystalline sugars and milk whey proteins in powder form are dissolved in the mixture prepared above, possibly after being pre-mixed dry, preferably in quantities of from 2 to 4% by weight with reference to the total weight of the emulsion, preferably by means of a blade stirrer or a mixer, for a period of from 10 to 20 minutes, during which the temperature is preferably kept at a value of between 40 and 60°C. After the powders have dissolved, a mixture preferably having a viscosity of between 0.2 - 2 Pa.s (200 and 2000 cps) is generally obtained. The whey proteins may be introduced mixed with lactose.

The fat phase is prepared with the use of fatty substances such as vegetable fats or butter fat in the presence of a lipophilic emulsifier, as cited above, as a surfactant. In this step, the mixture of fats is heated to a temperature of between 50 and 70°C, preferably to 65°C, and is stirred slowly for a period generally of the order of 5 minutes.

The phase containing the fresh cheese; the yoghurt or the sour cream with the dissolved sugars and the milk whey proteins is then heated to a temperature of between 60 and 70°C; at this point, the mixture of fats is added and the mixture thus obtained is stirred by means of a stirrer with rotary blades or. a mixer (750-1500 rpm) for a period of between 3 and 10 minutes. Upon completion of this operation, the oil-in-water emulsion has a viscosity of between 0.5 - 4 Pa.s (500 and 4000 cps) at 65°C; the viscosity should preferably be such that, after heating of this phase to 90°C and subsequent cooling to 20°C a viscosity no greater than 1550 cps at 20°C is obtained.

The optional homogenization step is generally carried out at a temperature of between 60 and 70°C with a two-stage homogenizer. The homogenization pressure is generally below 150 kg/cm³.

In order to carry out the pasteurization step, the product is supplied by means of a pump to a cylinder with a scraped surface (having a rotor and blades scraping the internal wall), or another type of direct or indirect exchanger. In the cylinder with a scraped surface, the product is heated for a period of from 20 to 40 seconds to the pasteurization temperature which is normally between 80 and 110°C.

At the output of the pasteurizer, the product is cooled, preferably in two cylinders similar to that used for the pasteurization. The temperature is preferably reduced to 30-60°C in the first cylinder and to 20-40°C in the second.

The aeration step is carried out in one or more cylinders similar to those described above. The gas, preferably nitrogen, is introduced into the product at a pressure of 2-10 kg/cm³ before it enters the cylinders. The cylinders distribute the gas in the system by means of a suitable rate of rotation, reducing it to small bubbles and creating a thick plastic mass. During the aeration, the product may be cooled further by the circulation of a refrigerating fluid in the jackets of the cylinders. It is intended that the aeration step may be carried out by means of any other system known in the art.

The product thus obtained, after further cooling to about 2-8°C, is ready for use for filling bakery products, for example, with sweet bread or as a filling for wafers but it is also intended to be usable for filling pralines or to be packaged in containers to be eaten as a cream which can be spread.

If desired, the preparation method includes the addition of fruit purée or fruit pieces.

Formulations of compositions according to the invention are given by way of example below.

### Composition based on fresh cheese:

- fresh cheese: 55% by weight
- sugars: 18% by weight
- added fats: 15% by weight
- whey proteins: 10% by weight
- lipophilic and hydrophilic surfactant: 0.8% by weight
- flavourings: 1.2%.

### Composition based on yoghurt:

- yoghurt: 38% by weight
- added vegetable fats: 20.4% by weight
- cows' butter: 6.8% by weight
- sugars; 23% by weight
- whey proteins*: 10% by weight
- lipophilic and hydrophilic surfactant: 0.8% by weight
- flavourings: 1%
* mixture of whey proteins and lactose with 40% by weight of whey proteins.

The final aerated product has a final consistency, expressed in grams, of between 100 and 750g measured at 5°C 5' after extrusion (carried out at 2°C) with a TEXTURE ANALYZER instrument, 60° conical probe, distance 25 mm, speed 0.5 mm/s, expressed as the maximum peak value.

For compositions intended for filling bakery products, the consistency value is preferably between 300 and 400g; for filling wafer-type products, the preferred value is about 100-150g.

With regard to the use of the composition as a filling in shaped products, for example pralines, the consistency can be measured by means of a Brookfield instrument, Elipath probe, speed 10 rpm, factor 400, and is between 10 - 40 Pa.s (10,000 and 40,000 cps), preferably about 20 Pa.s (20,000 cps) at 10-15°C.

The final product has a water activity (Aw), that is, free water, of between 0.75 and 0.94; the free water value is important with regard to exchange with components having different activities (Aw), such as bread and wafers with which the composition. is to come into contact; for this purpose, it is desirable for the finished product to reach an equilibrium Aw value in contact with the bakery products of between 0.75 and 0.92 to achieve optimal preservation at both organoleptical and microbiological levels with a "shelf life" of at least 50 days at a temperature of between +4 and +15°C.

The preferred values relating to chemical and physical parameters of the composition are summarised in the table below.

| | **Non-aerated** **mixture** | **Aerated finished** **product** |
|---|---|---|
| pH (with fruit) | --- | 3.5 - 4 |
| pH (without fruit) | --- | 4.4 - 4.8 |
| Brookfield | 1,5 - 2 | 100 - 200 |
| Viscosity Pa.s (cps) | (1,500-2;000) | (100,000-200,000) |
| Moisture | 30 - 32 . | 27 - 31 |
| Fats | --- | 31 - 33 |
| Sucrose | --- | 22 - 25 |
| Proteins % wt. | --- | 5 - 8 |
| Aw | 0.82 - 0.92 | 0.80 - 0.9 |
| Density | 0.9 - 1.1 | 0.48 - 0.7 |

## Claims

1. An aerated food composition constituted by an oil-in-water emulsion comprising fats, milk proteins, possibly sugars, and water, having an acid pH of from 3.5 to 6, **characterized in that** it has:
- a food fat content of from 20 to 45% by weight, and
- a water content of from 20 to 38% by weight,
and **in that** it is free of thickeners and fusion salts and it is obtainable by the steps of:
a) preheating a food component selected from fresh cheese, yoghurt, sour cream and mixtures thereof, with stirring, at a temperature of from 40 to 60°C;
b) dissolving, in the mixture prepared in a), milk whey proteins in powder form in quantities of from 1 to 10% by weight with reference to the final weight of the emulsion, and possibly sweeteners in powder form, with stirring;
c) preparing a fat phase comprising butter fat and/or vegetable fats, at a temperature of between 50 and 70°C, in the presence of a lipophilic surfactant;
d) mixing the fat phase with the phase produced in b), with stirring, to produce an oil-in-water emulsion having a viscosity of from (500 to 4000 cps) 0.5 to 4 Pa.s at 65°C;
e) pasteurizing the emulsion thus obtained at a temperature of between 80 and 110°C for a period of from 20 to 40 seconds;
f) precooling the mixture to a temperature of from 30 to 60°C; and
g) aerating the mixture by the injection of an inert gas.

2. A food composition according to Claim 1, **characterized in that** it comprises a component selected from fresh cheese, yoghurt, sour cream and mixtures thereof, in quantities of from 20 to 60% with reference to the total weight of the composition.

3. A food composition according to Claims 1 or 2, **characterized in that** it has a casein content no greater than 5% by weight.

4. A food composition according to any one of the preceding claims, **characterized in that** it comprises a quantity of from 20 to 40% by weight of sugars.

5. A food composition according to any one of the preceding claims, **characterized in that** it comprises fresh cheese in a quantity of from 20 to 60% by weight with reference to the weight of the composition, the fresh cheese having a moisture content of from 45 to 80% by weight, a fat content of from 16 to 40% by weight, and a protein content of from 2 to 10% by weight.

6. A food composition according to Claim 5, **characterized in that** the fresh cheese used has a moisture content of from 60 to 70% by weight, a fat content of from 22 to 27% by weight, and a protein content of from 5 to 6% by weight.

7. A food composition according to Claim 5 or Claim 6, in which the fresh cheese is produced by inoculating a mixture of milk and cream having a fat content of from 5 to 20% by weight with milk ferments in quantities of from 0.1 to 2% by weight.

8. A food composition according to Claim 7, in which the inoculating milk ferments have a ratio between lactobacilli and streptococci of from 1:10 to 1:100.

9. A food composition according to any one of Claims 1 to 4, comprising a quantity of from 10 to 40% by weight of yoghurt, with reference to the weight of the emulsion.

10. A food composition according to Claim 9, **characterized in that** a surfactant which can be dispersed in water is added to the yoghurt in step a).

11. A food composition according to any one of Claims 1 to 3, comprising a quantity of from 20 to 60% by weight of sour cream, with reference to the total weight of the composition.

12. A food composition according to any one of the preceding claims, having a water activity (Aw) of from 0.75 to 0.94.

## Patentansprüche

1. Begaste Lebensmittelzusammensetzung, die von eine Öl-in-Wasser-Emulsion gebildet wird, welche Fette, Milchproteine, möglicherweise Zucker, und Wasser umfaßt, einen sauren pH zwischen 3,5 und 6 hat, **dadurch gekennzeichnet, daß** sie
- einen Lebensmittelfettgehalt von 20 bis 45 Gew.-% und
- Wassergehalt von 20 bis 38 Gew.-% hat und daß
sie von Verdickungsmitteln und Schmelzsalzen frei ist und durch folgende Stufen erhältlich ist:
a) Vorerwärmen einer Lebensmittelkomponente, ausgewählt aus Frischkäse, Joghurt, Sauerrahm und Gemischen davon, unter Rühren bei einer Temperatur von 40 bis 60°C;
b) Lösen in dem Gemisch, das in a) hergestellt wurde, Milchmolkeproteine in Pulverform in Mengen von 1 bis 10 Gew.-%, bezogen auf das Endgewicht der Emulsion, und möglicherweise Süßungsmittel in Pulverform unter Rühren;
c) Herstellen einer Fettphase, die Butterfett und/oder pflanzliche Fette umfaßt, bei einer Temperatur zwischen 50 und 70°C in Gegenwart eines lipophilen oberflächenaktiven Mittels;
d) Vermischen der Fettphase mit der in b) produzierten Phase unter Rühren, wodurch eine Öl-in-Wasser-Emulsion mit einer Viskosität bei 65°C von 0,5 bis 4 Pa·s (500 bis 4000 cps) hergestellt wird;
e) Pasteurisieren der so erhaltenen Emulsion bei einer Temperatur zwischen 80 und 110°C über einen Zeitraum von 20 bis 40 Sekunden;
f) Vorkühlen des Gemisches auf eine Temperatur von 30 bis 60°C und
g) Begasen des Gemisches durch Injektion eines Inertgases.

2. Lebensmittelzusammensetzung nach Anspruch 1, **dadurch gekennzeichnet, daß** sie eine Komponente, ausgewählt aus Frischkäse, Joghurt, Sauerrahm und Gemischen davon, in Mengen von 20 bis 60 %, bezogen auf das Gesamtgewicht der Zusammensetzung, umfaßt.

3. Lebensmittelzusammensetzung nach Anspruch 1 oder Anspruch 2, **dadurch gekennzeichnet, daß** sie einen Caseingehalt von nicht größer als 5 Gew.-% hat.

4. Lebensmittelzusammensetzung nach einem der vorangehenden Ansprüche, **dadurch gekennzeichnet, daß** sie eine Menge von 20 bis 40 Gew.-% Zucker umfaßt.

5. Lebensmittelzusammensetzung nach einem der vorangehenden Ansprüche, **dadurch gekennzeichnet, daß** sie Frischkäse in einer Menge von 20 bis 60 Gew.-%, bezogen auf das Gewicht der Zusammensetzung, umfaßt, wobei der Frischkäse einen Feuchtigkeitsgehalt von 45 bis 80 Gew.-%, einen Fettgehalt von 16 bis 40 Gew.-% und einen Proteingehalt von 2 bis 10 Gew.-% hat.

6. Lebensmittelzusammensetzung nach Anspruch 5, **dadurch gekennzeichnet, daß** der verwendete Frischkäse einen Feuchtigkeitsgehalt von 60 bis 70 Gew.-%, einen Fettgehalt von 22 bis 27 Gew.-% und einen Proteingehalt von 5 bis 6 Gew.-% hat.

7. Lebensmittelzusammensetzung nach Anspruch 5 oder Anspruch 6, wobei der Frischkäse durch Beimpfen eines Gemisches aus Milch und Sahne mit einem Fettgehalt von 5 bis 20 Gew.-% mit Milchfermenten in Mengen von 0,1 bis 2 Gew.-% hergestellt wird.

8. Lebensmittelzusammensetzung nach Anspruch 7, wobei die beimpfenden Milchfermente ein Verhältnis von Lactobacilli zu Streptococci von 1:10 bis 1:100 haben.

9. Lebensmittelzusammensetzung nach einem der Ansprüche 1 bis 4, die eine Menge von 10 bis 40 Gew.-% Joghurt, bezogen auf das Gewicht der Emulsion, umfaßt.

10. Lebensmittelzusammensetzung nach Anspruch 9, **dadurch gekennzeichnet, daß** ein oberflächenaktives Mittel, das in Wasser dispergiert werden kann, in Stufe a) dem Joghurt zugesetzt wird.

11. Lebensmittelzusammensetzung nach einem der Ansprüche 1 bis 3, die eine Menge von 20 bis 60 Gew.-% Sauerrahm, bezogen auf das Gesamtgewicht der Zusammensetzung, umfaßt.

12. Lebensmittelzusammensetzung nach einem der vorangehenden Ansprüche, die eine Wasseraktivität (Aw) von 0,75 bis 0,94 hat.

## Revendications

1. Composition alimentaire aérée constituée par une émulsion huile-dans-eau comprenant des matières grasses, des protéines laitières, éventuellement des sucres, et de l'eau, ayant un pH acide de 3,5 à 6, **caractérisée en ce qu'**elle possède :
- une teneur en matières grasses alimentaires de 20 à 45% en poids, et
- une teneur en eau de 20 à 38% en poids,
et **en ce qu'**elle est dépourvue d'épaississants et de sels de fusion, et elle peut être obtenue par les étapes consistant :
a) à préchauffer un constituant alimentaire choisi entre le fromage frais, le yaourt, la crème aigre et leurs mélanges, sous agitation, à une température de 40 à 60°C ;
b) à dissoudre, dans le mélange préparé en a), des protéines de petit lait sous forme de poudre en des quantités de 1 à 10% en poids par rapport au poids final de l'émulsion, et éventuellement des édulcorants sous forme de poudre, sous agitation ;
c) à préparer une phase de matières grasses comprenant de la matière grasse butyrique et/ou des matières grasses végétales, à une température comprise dans l'intervalle de 50 à 70°C, en présence d'un agent tensioactif lipophile ;
d) à mélanger la phase de matières grasses avec la phase produite en b) sous agitation, pour produire une émulsion huile-dans-eau ayant une viscosité de 0,5 à 4 Pa.s(500 à 4000 cps) à 65°C;
e) à pasteuriser l'émulsion ainsi obtenue à une température de 80 à 110°C pendant une période de temps de 20 à 40 secondes ;
f) à prérefroidir le mélange à une température de 30 à 60°C ; et
g) à aérer le mélange par injection d'un gaze inerte.

2. Composition alimentaire suivant la revendication 1, **caractérisée en ce qu'**elle comprend un constituant choisi entre le fromage frais, le yaourt, la crème aigre et leurs mélanges, en des quantités de 20 à 60% par rapport au poids total de la composition.

3. Composition alimentaire suivant la revendication 1 ou 2, **caractérisée en ce qu'**elle a une teneur en caséine non supérieure à 5% en poids.

4. Composition alimentaire suivant l'une quelconque des revendications précédentes, **caractérisée en ce qu'**elle comprend une quantité de 20 à 40% en poids de sucres.

5. Composition alimentaire suivant l'une quelconque des revendications précédentes, **caractérisée en ce qu'**elle comprend du fromage frais en une quantité de 20 à 60% en poids par rapport au poids de la composition, le fromage frais ayant une teneur en humidité de 45 à 80% en poids, une teneur en matières grasses de 16 à 40% en poids et une teneur en protéines de 2 à 10% en poids.

6. Composition alimentaire suivant la revendication 5, **caractérisée en ce que** le fromage frais utilisé a une teneur en humidité de 60 à 70% en poids, une teneur en matières grasses de 22 à 27% en poids et une teneur en protéines de 5 à 6% en poids.

7. Composition alimentaire suivant la revendication 5 ou la revendication 6, dans laquelle le fromage frais est produit en ensemençant un mélange de lait et de crème ayant une teneur en matières grasses de 5 à 20% en poids avec des ferments lactiques en des quantités de 0,1 à 2% en poids.

8. Composition alimentaire suivant la revendication 7, dans laquelle les ferments lactiques d'ensemencement ont un rapport entre les lactobacilles et les streptocoques compris dans l'intervalle de 1:10 et 1:100.

9. Composition alimentaire suivant l'une quelconque des revendications 1 à 4, comprenant une quantité de 10 à 40% en poids de yaourt, par référence au poids de l'émulsion.

10. Composition alimentaire suivant la revendication 9, **caractérisée en ce qu'**un agent tensioactif qui peut être dispersé dans l'eau est ajouté au yaourt dans l'étape a).

11. Composition alimentaire suivant l'une quelconque des revendications 1 à 3, comprenant une quantité de 20 à 60% en poids de crème aigre, par référence au poids total de la composition.

12. Composition alimentaire suivant l'une quelconque des revendications précédentes, ayant une activité d'eau (Aw) de 0,75 à 0,94.
